Europäisches Patentamt

**European Patent Office**

**Office européen des brevets**

(11) Publication number: **0 027 718**

**A1**

# EUROPEAN PATENT APPLICATION

(21) Application number: **80303647.4**

(22) Date of filing: **15.10.80**

(51) Int. Cl.³: **F 24 J 3/02**

(30) Priority: **18.10.79 US 86076**

(43) Date of publication of application:
**29.04.81 Bulletin 81/17**

(84) Designated Contracting States:
**CH DE FR GB LI**

(71) Applicant: **OPTICAL COATING LABORATORY, INC.**
**2789 Giffen Avenue**
**Santa Rosa Ca. 95403(US)**

(72) Inventor: **Gurev, Harold Samuel**
**52 Canyon Oak Drive**
**San Rafael, California 94903(US)**

(74) Representative: **BAYLISS, Geoffrey Cyril et al,**
**BOULT, WADE & TENNANT 27 Furnival Street**
**London EC4A 1PQ(GB)**

(54) Articles having optical properties, selective solar absorbers and solar heating structures.

(57) An optical coating is formed on a flexible fibrous substrate such as cloth or paper (10) to form a selective solar absorber useful in a passive solar energy structure such as a Trombe wall. The optical coatings comprise a thin opaque metal layer (12) formed first on the fibrous substrate surface (10A, 10B) with either a graded cermet film (13) or a multilayer interference filter formed on the thin metal layer.

FIG.—I

EP 0 027 718 A1

- 1 -

### ARTICLES HAVING OPTICAL PROPERTIES, SELECTIVE SOLAR ABSORBERS AND SOLAR HEATING STRUCTURES

This invention relates generally to optical coatings designed for selected optical performance and, more specifically, to an optical coating formed on the surface of a flexible fibrous substrate such as paper to produce a selected optical performance such as selective solar absorption.

Generally the optical coating art involves the formation of one or more layers of preselected materials on a substrate or other support element to provide a desired optical response to radiation incident thereon in terms of reflectance, absorptance and/or emittance. In the past the general view has been that optical coatings should be formed on smooth or specular substrate surfaces in order to provide uniform and optimum optical properties. One exemplary prior use of optical coatings is the formation of selective solar absorbers having the characteristic of high solar absorptance and low emittance for infrared radiation. Such selective solar absorbers have been found to be useful in certain passive solar energy systems to provide high absorptance of solar radiation during daylight hours but low reradiation of heat especially at night. Prior art selective solar absorbers have generally been constructed by forming either a cermet film or a multilayer interference filter on a smooth metal foil or on a smooth plastic film on which an infrared reflective layer of aluminum or other material has initially been deposited.

Selective solar absorbers are especially useful in passive solar heating systems such as Trombe walls. A Trombe wall basically comprises a relatively thick concrete wall (concrete block or poured concrete) forming a part of an enclosure desired to be heated. The exterior facing surface of the Trombe wall is covered with a solar radiation absorbing layer. Then, one or more separated layers of glazing material (i.e. window glass or plexiglas) are mounted over the concrete wall with the layers of glazing material spaced a moderate distance from the exterior facing wall surface to insulate it from the ambient environment but to permit convection heating of the intervening air space. Initially Trombe walls were built using black paint as the solar radiation absorbing material. However, while certain black paint materials would provide relatively high absorptance of solar radiation, they also generally have a high infrared emittance. Accordingly, while the black painted surface of Trombe wall was absorbing radiation during periods of sunlight it was also reradiating back to the sun and other objects outside the wall, thus limiting the elevated Trombe wall temperature which could be achieved. More seriously, during the night, a black painted Trombe wall surface would radiate profusely. Thus, to preclude rapid nighttime heat loss, it was necessary to cover the wall in some fashion which distracted from the otherwise passive nature of the solar heating system.

More recently it was discovered that the use of a selective solar absorber on the exterior facing surface of the Trombe wall improves the thermal performance of the wall in terms of increasing the daytime wall temperature achieved and eliminating the need for nighttime covering against reradiation. Use of a selective solar absorber may also reduce the number of glazing layers needed to achieve the same thermal performance as a Trombe wall with a black painted surface.

Previously known selective solar absorbers which can be utilized in Trombe wall construction are both the optical coating type mentioned previously and a metal foil coated with a black foam material. Both of these types of selective solar absorbers are quite expensive to use in Trombe wall construction and are difficult to apply to a concrete wall surface in a aesthetically pleasing manner. Both are difficult wall hangings to work with without producing unsightly creases and both have a tendency to show finger marks and other flaws. More importantly, the nonporous nature of the substrates of such absorbers are basically incompatible with the environment of a concrete wall which has a highly porous surface which needs to breathe gases such as water vapor both in and out of the wall. This is especially true during curing of a poured concrete wall.

The present invention generally involves the discovery that, in at least some instances, a thin film coating may be formed on a surface of a flexible fibrous substrate such as a sheet of paper or fabric and still achieve virtually the same optical characteristics obtained by forming the same thim film coating on a smooth or specular substrate surface. In connection with tis invention, the term fibrous substrate will be used to designate any paper or cloth material made from vegetable or plastic or animal fibers including coated materials which retain a fibrous, porous characteristic. Thus, an optical film in accordance with this invention generally comprises a flexible fibrous substrate and a thin film coating formed on a surface of said substrate to provide a predetermined optical response to incident radiation. In accordance with one specific aspect of this

-4-

invention, the flexible substrate is a sheet of paper or cloth material having porous surface and the thin film coating comprises a plurality of layers of preselected materials formed sequentially on the surface to preselected thicknesses to produce a coating characterized by high solar absorptance and low emittance of infrared radiation.

In a preferred embodiment of a selective solar absorber, the optical coating comprises a layer of infrared reflecting material formed on the surface of the paper or cloth sheet and a cermet film formed on the layer of reflecting material. In accordance with an alternative embodiment, the optical coating comprises a layer of infrared reflecting material formed on the paper or cloth surface and an interference filter type of multilayer coating formed on the layer of reflecting material and comprising a first layer of dielectric material formed on the layer of reflecting material, a thin layer of metal formed on the first layer of dielectric material, and a second layer of dielectric material formed on the thin metal layer.

In accordance with another aspect of this invention, a passive solar heating structure adapted to form at least a portion of an enclosure is provided. The passive solar heating structure includes a body of material having heat sink characteristics and having one surface facing in a direction to receive solar radiation, and a selective solar absorber carried by said surface and a transparent insulating structure overlying the solar absorbing film and being spaced therefrom. The selective solar absorber generally comprises a porous sheet of fibrous material and a thin film coating formed on a surface of the sheet, the thin film coating comprising a plurality of sequentially formed layers of preselected materials of preselected thicknesses to produce a coating having high solar absorptance and low emittance of infrared radiation. Specifically, the thin film coating is preferably a cermet film formed on a layer of infrared reflecting material initially provided on the surface of the sheet. Alternatively, the thin film coating may comprise an interference filter formed on an initial layer of infrared reflecting material.

It has been determined that selective solar absorbers constructed in accordance with this invention by forming appropriate optical coatings on fibrous substrates have generally the same optical characteristics as solar absorbers having optical coatings formed on plastic or metal films having a smooth or specular surface. Generally, selective solar absorbers in accordance with this invention have slightly higher solar absorptance in comparison to films utilizing a smooth or specular substrate and also have somewhat higher infrared emittance due to the rough surface of the substrate. In addition, comparison of spectral hemispherical reflectance traces show that the optical coatings on paper substrates have the same reflectance minima and maxima positions as the same optical coatings formed on smooth foil or plastic film.

Selective solar absorbers constructed with optical coatings on fibrous substrates have a number of advantages over films constructed on smooth metal foils or specular plastic film substrates. One advantage is the generally lower cost of fibrous substrates than aluminum foil or plastic film. Additionally, fibrous substrates are porous, whereas metal foils and plastic films are not. Consequently, a solar absorber on a fibrous substrate permits out-gassing of wall structures and adhesives and is thus more compatible with the environment of passive solar energy systems such as Trombe walls. Moreover, solar absorbers formed on fibrous substrates are much easier to handle as wall hangings or as a draping material around irregular objects. Specifically, with respect to Trombe wall systems, the ease of hanging of a fiber-based solar absorber versus one utilizing a metal foil or plastic film is quite important since it is well known that metal and plastic foils are difficult to apply to a wall without producing unsightly creases or bulges. Furthermore, fingermarks and other flaws are much less obvious on a fiber-based solar absorber. In the Trombe wall environment it may be preferable to form the solar absorbing films on a plastic paper substrate such as spun-bonded, polyolefin papers manufactured by DuPont under the Tyvek trademark. Use of plastic paper as a substrate material would maximize the environmental stability of the solar absorber. Being free of any materials that constitute food for insects and being free from potentially damaging effects of water vapor such as mildew would make a Tyvek-based solar absorber virtually ideal in the Trombe wall environment. Tyvek and other plastic fibrous subsrates have the additional advantage that they are less likely to be adversely affected by removal of moisture during a vacuum deposition process. Paper may become brittle if too much moisture is removed during the process of vacuum depositing thin films thereon. In addition, certain textural effects could be achieved, if desired, when a fibrous substrate material is used.

Other features and advantages of this invention will be apparent from a consideration of the detailed description below in conjunction with the accompanying drawings.

Fig. 1 is a fragmented cross-sectional view of a fiber-based selective solar absorber in accordance with a preferred embodiment of this invention utilizing a cermet film.

Fig. 2 is a fragmented cross-sectional view of an alternative embodiment of a selective solar absorbing film utilizing an interference type optical coating structure on a fibrous substrate.

-7-

Fig. 3 depicts an enclosure on which a Trombe wall system is formed in a passive solar heating arrangement.

Fig. 4 is a cross-sectional representation of a Trombe wall construction taken along the lines 4-4 shown in Fig. 3 and utilizing a selective solar absorber in accordance with this invention.

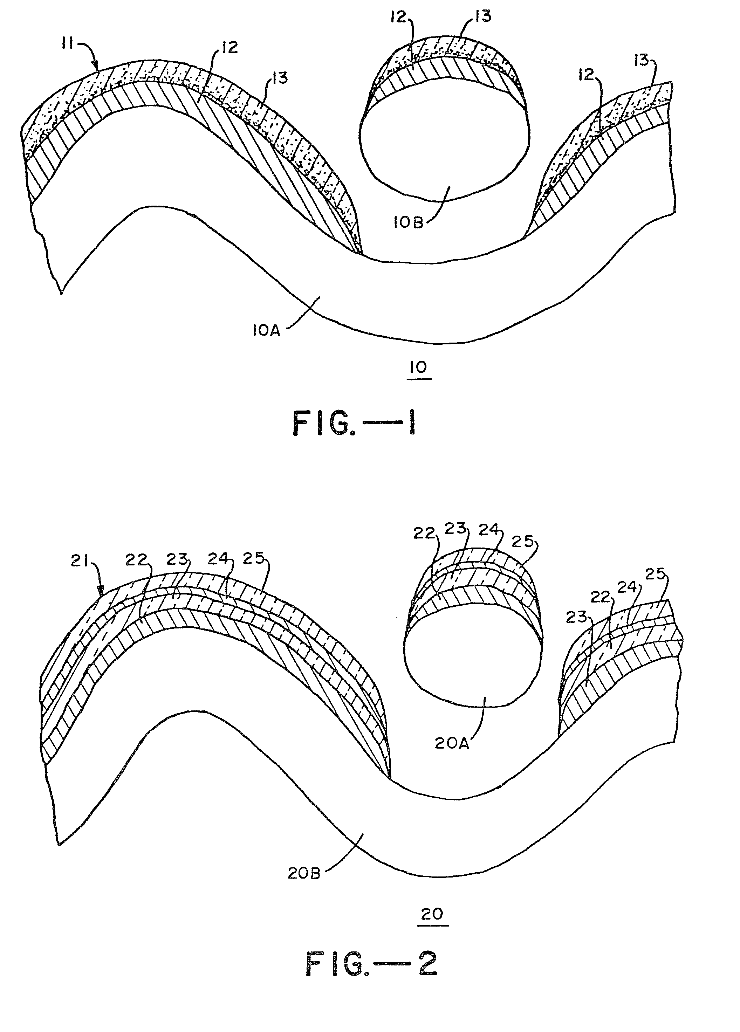

Fig. 1 depicts a cross-sectional view of a portion of a surface of a selective solar absorber comprising a thin film, generally designated with the reference numeral 11, formed on the porous surface of a sheet of fibrous material such as a sheet of paper, generally designated by the reference numeral 10. Fig. 1 specifically depicts a pair of paper fibers 10A and 10B on the surface of paper substrate 10 with the fiber 10B overlying the fiber 10A but spaced therefrom at this location. As shown, thin film coating 11 does not bridge the gap between paper fibers 10A and 10B, and thus the optical coating is discontinuous on the surface of paper substrate 10. In this embodiment optical coating structure 11 comprises a layer 12 of infrared reflecting material initially deposited on the surface of paper substrate 10 and a cermet film 13 formed over the layer 12 of infrared reflecting material.

The layer 12 of infrared reflecting material is conveniently formed by vacuum depositing aluminum to a thickness of about 1,000 Angstroms. Thicknesses in the range of 600-3000 Angstroms would also be suitable. The principal requirement of this reflecting layer is that it be substantially optically opaque. Materials other than aluminum such as, for example, silver and copper could also be utilized as infrared reflecting layer 12.

Cermet film 13 is conveniently formed in a vacuum evaporation process by co-evaporation of separate sources of metal and dielectric material. A number of different metal and dielectric materials could be employed in forming cermet layer 13. For example, sources of either chromium or nickel could be utilized as the metal material together with either sources of silicon monoxide or silicon dioxide as the dielectric material. A number of other well-known metals and dielectrics could also be used in the co-evaporation process to form cermet film 13. Cermet film 13 is conveniently deposited to a thickness of 2000 Angstroms. However, the thickness of the cermet film is not critical and thicknesses in the range of about 1,000 to 3,000 Angstroms will provide satisfactory performance. Cermet film 13 is conveniently formed with a graded dielectric-to-metal ratio with the film composition 25-50% metal at the surface of aluminum layer 12 and 100% dielectric at the outer surface. The use of less than 50% metal at the aluminum surface produces the necessary discontinuous metal phase at that surface.

It is well known that cermet films formed on a reflecting metal layer will behave as a selective solar absorber characterized by a high solar absorptance and a low infrared emittance. A theoretical explanation for this behavior of cermet films can be found in the following article which is specifically incorporated herein by reference: G.G. Gangvist et al., "Selective Absorption of Solar Energy in Ultrafine Metal Particles: Model Calculations", Journal of Applied Physics, Vol.50, No.2, February 1979.

Solar absorptance and infrared emittance data obtained from measurements on a number of comparative samples of cermet films formed on smooth aluminum or plastic foil and on various types of paper substrates demonstrates that generally comparable optical characteristics are obtained. The coated paper samples show somewhat higher absorptance and also somewhat higher emittance. Samples were prepared by coating various selected papers first with a thin layer of aluminum and then with a thin cermet film. For comparison purposes smooth Kapton plastic films, polyester plastic films and smooth aluminum foil were coated in the same fashion. More specifically, the samples were prepared by first evaporating a layer of aluminum on the surface of the substrate to a thickness between 1,000 and 3,000 Angstroms. Thereafter, the samples were coated with a mixture of metal and dielectric material by co-evaporation from two separate sources. For some samples the metal and dielectric material were chromium and silicon monoxide, respectively. Other samples were made with mixtures of chromium and silicon dioxide or nickel and silicon monoxide. In each instance the cermet film thickness was approximately 2,000 Angstroms and was graded from a 25 to 50% metal content at the surface of the aluminum layer to all dielectric at the outer surface of the cermet film. Experimental data was taken by measuring the hemispherical reflectance of the samples at wavelengths from 0.35 to 2.5 microns and measuring the total emittance at 180°F. Data showing solar absorptance and emittance for various samples using a chromium silicon dioxide cermet film is presented in the following table:

TABLE 1

| SUBSTRATE (SURFACE CHARACTERISTICS) | $a_S$ | $\varepsilon$ |
| --- | --- | --- |
| Aluminum foil | 95.5% | 7.5% |
| Kapton film | 95.5% | 7.0% |
| Glassine paper | 96.5% | 14.0% |
| Glossy coated paper | 96.5% | 11.0% |
| Uncoated writing paper | 97.0% | 17.0% |
| Tyvek plastic paper | 97.0% | 12.5% |
| Brown Kraft paper | 97.0% | 30.0% |

The spectral hemispherical reflectance traces taken on the coated paper substrates were compared with the traces for the specular films on the smooth aluminum foil and Kapton film samples. These comparisons show that both have substantially the same reflectance minima and maxima positions. In general, the above data shows that cermet solar absorber films formed on paper substrates are slightly more absorbing than the specular films formed on smooth substrates. This increase in solar absorptance probably results from the increased geometric trapping characteristics of the films on the paper surfaces due to the incident radiation undergoing multiple reflections. This seems to follow from the observation that the amplitude of the reflectance maxima of the film goes down with an increase in the roughness of the paper on which the film is formed. Referring back to Fig. 1 it is apparent that solar radiation incident on optical coating structure 11 strikes it at different angles. Consequently, the incident radiation will undergo multiple reflections from the rough surface and, therefore, will have a higher probability of being trapped at the coated surface. This same effect is also responsible for the increased infrared emittance.

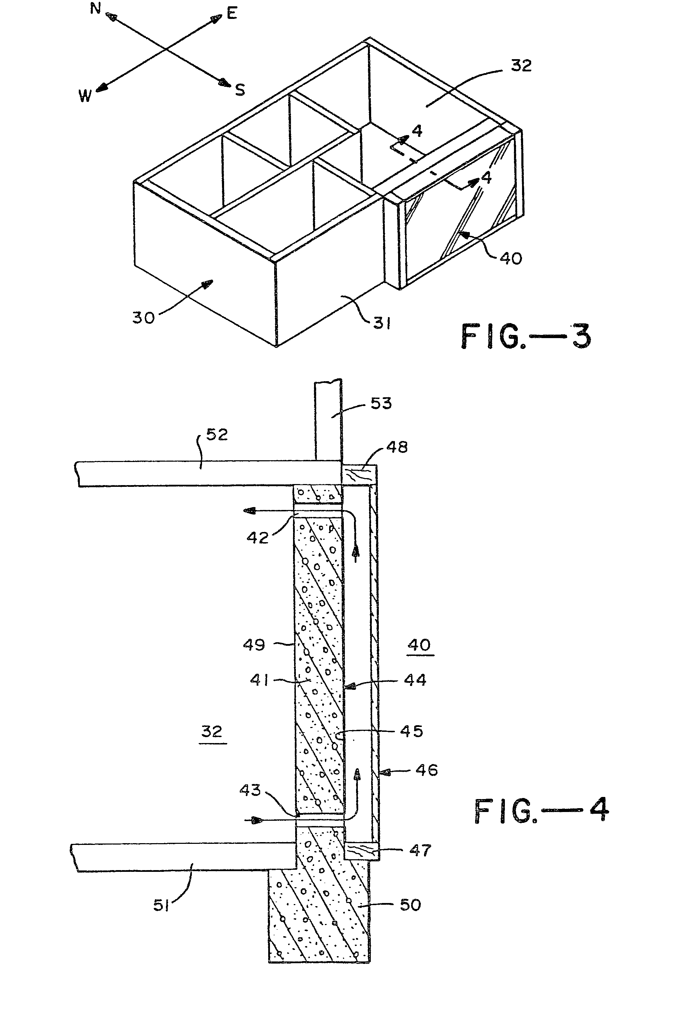

Fig. 2 depicts an interference filter type of thin film coating, generally designated by the reference numeral 21, formed on a surface of a paper substrate generally designated by numeral 20. The interference filter coating 21 is specifically shown formed on a pair of paper fibers 20A and 20B lying on the surface of the paper substrate 20. As depicted the interference filter 21 is a discontinuous coating due to the void which exists between paper fibers 20A and 20B. Interference filter coating 21 is formed of four thin film layers, an opaque infrared reflecting layer 22, a first dielectric layer 23, a thin metal layer 24 and a second dielectric layer 25.

-11-

Layer 22 conveniently comprises an evaporated layer of aluminum formed to a thickness of about 1000 Angstroms, although thickness in the range of 600 to 3000 Angstroms would be suitable. First dielectric layer 23 is conveniently formed by vacuum evaporation of a dielectric material such as silicon monoxide or silicon dioxide. A number of other dielectric materials, such as aluminum oxide and magnesium oxide could also be employed. Layer 23 is formed to a thickness which constitutes a quarter wave optical thickness for radiation at a wavelength of about 700 nanometers which is in the visible portion of the solar radiation spectrum. Thin metal layer 24 is conveniently formed by vacuum evaporation of a material such as chrome to a thickness of about 100 Angstroms. Other metals such as nickel and molybdemum could also be used for this thin metal layer.

Second dielectric layer 25 can also be formed by vacuum evaporation of material such as silicon monoxide, silicon dioxide, aluminum oxide or magnesium oxide. Second dielectric layer 25 is also formed to a thickness comprising a quarter wave optical thickness at a 700 nanometer wavelength. The behavior of an interference coating in this type of application is well-known. A theoretical explanation of this behavior is found in an article by G. Haas et al. in the Journal of the Optical Society of America, Vol. 46, 1956, page 31.

Various samples of fibrous and smooth substrates were coated with an interference type filter for producing a selective solar absorber and tests of the hemispherical reflectance of the samples and total emittance thereof were taken in the same fashion as the samples of cermet films previously discussed. Table 2 below contains some of the data obtained from these experimental samples.

-12-

## TABLE 2

| SUBSTRATE | $a_s$ | $\epsilon$ |
|---|---|---|
| Glass | 92.9% | 6% |
| Glassine paper | 93.5% | 8% |
| Glossy coated paper | 94.9% | 7% |

From the experimental data given in Table 2 it can be concluded that interference type filters have substantially the same optical characteristics on fibrous substrates as they do on smooth substrates. Similar to the results achieved with cermet films, the absorptance of the interference filter type of optical coating on paper is somewhat higher than the similar coating on a smooth substrate and the emittance is also somewhat higher. However, the differences are not as great as in the samples using cermet films.

Generally, for this application cermet films of the type shown in Fig. 1 are preferable to the interference type filter coatings shown in Fig. 2 since the performance of the interference coating is highly dependent upon the integrity of the very thin metal layer sandwiched between the two dielectric layers. If that metal layer loses a substantial amount of its thickness by corrosion or oxidation, the performance of the design deteriorates rapidly. The performance of a cermet coating is not so critically dependent upon the metal content of the film. Consequently, a cermet type of selective solar absorber will have greater environmental stability, a factor which could be especially important in solar energy applications.

As previously noted selective solar absorbers are particularly useful in passive solar energy systems such as Trombe wall systems. Fig. 3 depicts an enclosure which may

-13-

be a residential housing unit on a commercial or agricultural building generally designated by the reference numeral 30. A Trombe wall system generally designated by the reference numeral 40 is shown on part of one wall 31 of enclosure 30. Thus, the Trombe wall system 40 would provide supplemental solar heating to an interior room 32 and also to other rooms provided means for convecting heat from one room to another were provided. While a second story and/or a roof are not shown in Fig. 3, it is, of course, presumed that one or the other would be present to complete the enclosure of the room in which the Trombe wall is installed. Furthermore, while Trombe wall 40 is shown as comprising only a portion of wall 31, it might optionally be constructed to comprise all of that wall. As shown, a Trombe wall 40 would typically be constructed on a south facing wall of the enclosure in order to maximize its exposure to solar radiation.

Fig. 4 depicts a cross-section of an exemplary Trombe wall structure. Generally, Trombe wall 40 comprises a relatively thick concrete wall 41 having an exterior facing surface 45 with a solar absorber 44 carried thereon. A transparent glazing structure 46 is mounted over the exterior facing surface 43 and the top 48 and bottom 47 of glazing structure 46 together with its sides (not shown) are sealed in order to insulate and isolate wall 41 from the outside atmosphere. The thick concrete wall 41 of Trombe wall system 40 would typically be formed on a poured concrete footing 50 which also supports the floor joists 51 of room 32. If the structure of which it is a part has a below-grade basement, wall 41 would be formed on top of a correspondingly thick basement wall supported by a concrete footing. Wall 41 may comprise either a poured concrete structure or a cement block structure and may provide support for a second story wall 53 and/or ceiling joists 52.

The function of wall 41 in the Trombe wall system is as a heat sink for solar radiation incident on exterior facing wall 43 or more specifically on solar absorber 44. The heat stored in wall 41 is provided to the interior of room 32 by two means. A series of apertures 42 and 43 formed in top and bottom portions respectively of wall 41 will provide convection heating of colder air taken in through aperture 43 from the floor of room 32 warmed by the solar absorbing medium 44 and exiting through the vents 42 at the top of wall 41. This convection heating may be fan assisted. In combination with convection heating of the type just described, the heat stored in wall 41 will also radiate into the interior of room 32 since during periods of sunlight the sun facing surface of wall 41 may rise to a temperature as high as 180°F and the interior surface 49 of wall 41 will be maintained at body comfort temperatures in the range of 65°-75°F. Substantial warming of the air and objects in room 32 can be accomplished by radiation of heat from such a warm interior wall surface. In a typical Trombe wall installation, concrete wall 41 will be constructed about 12 inches thick and the same overall height as the room itself, usually about eight feet.

Glazing structure 46 of Trombe wall 40 will typically comprise one or more separated layers of glazing materials such as window glass or plexiglas. This glazing structure performs two functions. It is transparent to solar radiation and thus transmits radiation to solar absorbing medium 44. In addition, glazing structure 46 serves to insulate wall 41 from the outside ambient temperature. Typically the inner layer of glazing material in glazing structure 46 will be spaced a moderate distance (e.g. between six and twelve inches) from exterior facing surface 45 of wall 41 in order to provide for convection of air in the intervening space. Glazing structure 46 may be constructed in a removable fashion in order to provide for cleaning of the interior surface thereof and the exterior facing surface 45 of wall 41. This may be necessary in order to maintain the overall efficiency of the Trombe wall system.

In accordance with this invention the selective solar absorber 44 carried on exterior facing surface 45 of wall 41 comprises one of the selective solar absorbing films depicted in Figs. 1 and 2 and described above. Utilizing a selective solar absorber having a fibrous substrate has a number of advantage in the Trombe wall environment. First of all, a fiber-based solar absorber can be mounted on the exterior facing wall 45 in the same fashion as wallpaper is typically hung. The process would involve simply coating the underside of the fibrous substrate with a wallpaper type adhesive and applying it to the concrete wall surface. Persons with experience in wallhangings will appreciate that it is much easier to do a smooth job of hanging fiber-based wallhanging than it is to hang a foil wallhanging because any wrinkling of a foil results in a permanent blemish on the surface whereas fiber-based wallhangings can generally be smoothed even if wrinkles are initially formed therein. Moreover, foil wallhangings tends to stretch and produces bulges much more than fiber wallhangings.

Of greater importance is the environmental compatability between a porous concrete wall and a flexible, porous fiber substrate. A fiber-based selective solar absorber will permit concrete wall 41 to breathe in a normal fashion. The typical outgassing of water vapor and other gasses can be maintained if a fiber-based medium is utilized on the concrete wall. This is especially important during the curing process if concrete wall 41 is a poured concrete wall. It is also important in drying of the adhesive used to hang the wallhanging. It may be especially advantageous to utilize a selective solar absorber formed on a plastic paper substrate such as a Tyvek paper sheet. Since the

-16-

Tyvek plastic paper has no vegetable fiber or cellulose content to it, it has the added advantage of not being attractive to insects or household pests such as silver fish.  Further, it will experience none of the potential problems such as mildew that might otherwise be caused by water vapor in wall 41.

While the invention has been described in respect to its application to a particular passive solar energy system, namely the Trombe wall system, it is believed that other applications of a paper-based selective solar absorbing medium will be found.  For example, a selective solar absorber in accordance with this invention might find application as a seed bed cover in cold climates where its heating properties could be utilized to warm the ground in which seeds have been planted in order to enable earlier planting of vegetable gardens.  Furthermore, the invention may find application to other types of optical coatings on porous fibrous substrates.  Therefore, the above descriptions of embodiments and applications of this invention are given by way of example only and numerous modifications could be made therein without departing from the scope of this invention as claimed.

-17-

CLAIMS

1. In an article having optical properties, a flexible fibrous substrate and a thin film coating formed on one surface of said substrate to provide a predetermined optical response to incident radiation.

2. An article as claimed in Claim 1, wherein said substrate is a selected one of a paper or cloth material having a porous surface and said thin film coating comprises a plurality of layers of preselected materials formed sequentially on said surface of said substrate to preselected thicknessses such that said coating is characterized by high solar absorptance and low emittance of infrared radiation.

3. An article as claimed in Claim 1 or Claim 2, wherein said thin film coating comprises a layer of infrared reflecting material formed on said surface of said substrate and a cermet film formed on said layer of infrared reflecting material.

4. An article as claimed in Claim 1 or Claim 2, wherein said thin film coating comprises a layer of infrared reflecting material formed on said surface of said substrate, a first layer of dielectric material formed on said layer of reflecting material, a layer of metal formed on said first layer of dielectric material, and a second layer of dielectric material formed on said layer of metal, both said first and second layers of dielectric material having a thickness constituting substantially a quarter wave optical thickness with respect to radiation at a selected wavelength in the visible portion of the solar radiation spectrum and said layer of metal having a thickness of about one hundred Angstroms.

-18-

5. In a selective solar absorber, a fibrous substrate having a relatively porous surface and a thin film coating formed on said surface, said thin film coating comprising a plurality of layers of preselected materials formed sequentially on said surface of said paper substrate to preselected thicknesses such that said thin film coating is characterized by high solar absorptance and low emittance of infrared radiation.

6. A selective solar absorber as claimed in Claim 5, wherein said thin film coating comprises a layer of infrared reflecting material formed on said surface of said fibrous substrate and a cermet film formed on said layer of infrared reflecting material.

7. A selective solar absorber as claimed in Claim 5, wherein said optical coating comprises a layer of infrared reflecting material formed on said rough surface of said paper substrate and sequential layers of a first dielectric, a metal, and a second dielectric formed on said layer of infrared reflecting material to provide an interference filter.

8. A selective solar absorber comprising a sheet of paper, a layer of infrared reflecting material formed on a surface of said paper and a cermet film formed on said layer of infrared reflecting material.

9. A selective solar absorber comprising a sheet of paper, a layer of infrared reflecting material formed on a surface of said paper and a multilayer interference filter formed on said layer of infrared reflecting material and characterized by high absorptance of solar radiation and low emittance of infrared radiation.

10. A selective solar absorber as claimed in Claim 9, wherein said interference filter comprises a first layer of dielectric material, a layer of metal material, and a second layer of dielectric material, said layers of dielectric materials being formed to a thickness comprising substantially a quarter wave optical thickness at a selected wavelength in the infrared spectrum and said metal layer having a thickness of about 100 Angstroms.

11. In a passive solar heating structure adapted to form at least a portion of an enclosure, a body of material having heat sink characteristics and having a surface facing in a direction to receive solar radiation, a selective solar absorber carried by said surface and a transparent insulating structure overlying said solar absorbing film and being spaced therefrom, characterized in that said selective solar absorber comprises a porous sheet of fibrous material and a thin film coating formed on a surface of said porous sheet on which said solar radiation is incident, said coating comprising a plurality of sequentially formed layers of preselected materials of preselected thicknesses such that said thin film coating has high solar absorptance and low infrared emittance.

12. A passive solar heating structure as claimed in Claim 11, wherein said thin film coating comprises a layer of infrared reflecting material formed on said surface of said sheet and a cermet film formed on said layer of infrared reflecting material.

-20-

13. A passive solar heating structure as claimed in Claim 11, wherein said thin film coating comprises a layer of infrared reflecting material formed on said rough surface of said paper sheet, a first layer of dielectric material formed on said layer of energy reflecting material, a layer of metal formed on said first layer of dielectric material, and a second layer of dielectric material formed on said layer of metal, both said first and second layers of dielectric material having a thickness constituting substantially a quarter wave optical thickness with respect to radiation at a selected wavelength in the visible portion of the solar radiation spectrum and said layer of metal having a thickness of about 100 Angstroms.

14. In a Trombe wall structure adapted to form at least a portion of an enclosure, a concrete wall having a surface facing in a direction to receive solar radiation, a selective solar absorber carried by said surface and a transparent insulating structure overlying said solar absorber and being spaced therefrom, said selective solar absorber comprising a porous sheet of fibrous material and a thin film coating formed on a surface of said sheet, said coating comprising a plurality of sequentially formed layers of preselected materials of preselected thicknesses such that said coating has high solar absorptance and low infrared emittance.

15. A passive solar heating structure as claimed in Claim 14, wherein said thin film coating comprises a layer of infrared reflecting material formed on said surface and a cermet film formed on said layer of infrared reflecting material.

-21-

16. A passive solar heating structure as claimed in Claim 14, wherein said thin film coating comprises a layer of infrared reflecting material formed on a surface of said sheet, a first layer of dielectric material formed on said layer of reflecting material, a layer of metal formed on said first layer of dielectric material, and a second layer of dielectric material formed on said layer of metal, both said first and second layers of dielectric material having a thickness constituting substantially a quarter wave optical thickness with respect to radiation at a selected wavelength in the visible portion of the solar radiation spectrum and said layer of metal having a thickness of about one hundred Angstroms.

GCB/MY/EA 265

1/2

FIG.—1

FIG.—2

FIG.—3

FIG.—4

**0027718**

European Patent
Office

**EUROPEAN SEARCH REPORT**

Application number

EP 80303647.4

## DOCUMENTS CONSIDERED TO BE RELEVANT

| Category | Citation of document with indication, where appropriate, of relevant passages | Relevant to claim |
|---|---|---|
| | DE - A1 - 2 705 337 (DORNIER SYSTEM GMBH) <br> + Pages 7, 10 + <br> -- | 1,9 |
| | DE - A1 - 2 523 089 (MESSER GRIES-HEIM GMBH) <br> + Pages 2,3 + <br> -- | 1,10 |
| | DE - A - 2 330 700 (LAING NIKOLAUS) <br> + Pages 2,3 + <br> -- | 1,10 |
| | DE - A1 - 2 901 921 (HEAT MIRROR ASSOCIATES) <br> + Totality + <br> -- | 1,3,6, 7,10,11 |
| | US - A - 3 986 491 (O'HEANLON EDWARD J.) <br> + Column 1, line 18 + <br> -- | 1 |
| | US - A - 3 000 375 (GOLAY M.J.E.) <br> + Totality + <br> ---- | 1-4,9 |

**CLASSIFICATION OF THE APPLICATION (Int. Cl.)**

F 24 J 3/02

**TECHNICAL FIELDS SEARCHED (Int. Cl.)**

F 24 J 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> VIENNA | Date of completion of the search <br> 07-01-1981 | Examiner <br> ENDLER | |

EPO Form 1503.1   06.78